# EUROPÄISCHE PATENTANMELDUNG

(11) **EP 1 916 139 A1**
(43) Veröffentlichungstag der Anmeldung: **30.04.2008**
(21) Anmeldenummer: 07019261.2
(22) Anmeldetag: 29.09.2007
(51) Int. Cl.: B60J 7/20

(54) **Kraftfahrzeug mit einem faltbaren, in einer Verdeckwanne ablegbaren Verdeck**

(30) Priorität: 06.10.2006 DE 102006047914
(71) Anmelder: Rausch und Pausch GmbH, 95100 Selb (DE)
(72) Erfinder: Haltermann, Frank, 21258 Heidenau (DE); Garbrecht, Kay, 20257 Hamburg (DE); Wagner, Tobias, 21149 Hamburg (DE)
(74) Vertreter: Donath, Dirk

(57) **Zusammenfassung**

Die Erfindung betrifft ein Kraftfahrzeug mit einem faltbaren, in einer Verdeckwanne (26) ablegbaren Verdeck (25), die senk- und hebbar gestaltet einen wechselnden Teil des Kofferraums (27) umfasst und zumindest teilweise durch eine Hutablage (32) verschließbar ist, wobei sowohl für die Bewegung des Verdecks (25) als auch für die Bewegung der Hutablage (32) und der Verdeckwanne (26) kinematische Anordnungen vorgesehen sind. Der Erfindung liegt die Aufgabe zugrunde, eine einfache, wirkungsvolle Kinematik zu schaffen, die bequem zu bedienen und der Automatisierung leicht zugänglich ist. Diese Aufgabe wird dadurch gelöst, dass die Hutablage (32) und die Verdeckwanne (26) von nur einem Motor unabhängig vom Verdeck angetrieben werden.

## Beschreibung

Die Erfindung betrifft ein Kraftfahrzeug mit einem faltbaren, in einer Verdeckwanne ablegbaren Verdeck gemäß der Gattung der Patentansprüche. Insbesondere betrifft die Erfindung Cabrios mit Faltdächern.

Es sind bereits Cabrios mit unveränderbaren Verdeckwannen bekannt, in die das Dach abgelegt wird. Hinsichtlich der Flexibilität günstiger sind Pkw mit veränderlichen Verdeckwannen, deren Böden manuell oder teilautomatisch von einer oberen, den Kofferraum vergrößernden Stellung in eine untere Lage für die Dachablage gebracht werden, siehe DE 298 09 007 U1. Im Pkw SAAB 442 bspw. wird die variable Verdeckwanne durch eine Seilzugmechanik mit der Verdeckdeckelmechanik verbunden, wodurch die Verdeckwanne durch Knopfdruck automatisch nach unten bewegt wird. Zur Vermeidung von Kollisionen der Verdeckwanne mit einer Kofferraumbeladung ist ein Schalter vorgesehen, der bei Kontakt ausgelöst wird und ein Stopsignal an die Dachsteuerung abgibt. Im Falle der Kopplung von Verdeckbewegung und Verdeckwannenbewegung, siehe DE 101 38 163 C2, wird eine Kollision mit dem Ladegut im Kofferraum erst während der Bewegung größerer Dachteile erkannt. Es muss also das Dach wieder geschlossen werden, und es kommt u. U. zu Verkehrsbehinderungen.
Bei den bekannten Fahrzeugdächern, die aus gegeneinander beweglichen starren Teilen bestehen, werden die Kofferraumtrennungen manuell geöffnet oder geschlossen. Die trennenden Teile sind entweder flexible Rollos wie in der DE 298 09 007 U1 oder feste Schalen wie in der DE 198 34 850 A1. In allen Fällen wird die abgesenkte Position der Verdeckwanne über Endlagenschalter ermittelt und als Startvoraussetzung an das Verdecksteuergerät gemeldet. Aus der DE 101 38 163 C2 ist ein Verdeckkasten zur Aufnahme eines verstellbaren Fahrzeugverdecks bekannt, bei dem der Kastenboden entsprechend dem geöffneten oder geschlossenem Fahrzeugverdeck sich in korrespondierend abgesenkter oder angehobener Stellung befindet und in abgesenkter Stellung von seiner Kinematik entkoppelt ist. Auch diese Lösung hat den Nachteil, dass das Fahrzeugverdeck sich schon bewegt, ohne dass die Gewähr gegeben ist, dass der Verdeckkasten überhaupt das Verdeck aufnehmen kann.

Der Erfindung liegt daher die Aufgabe zugrunde, durch Anwendung eines gemeinsamen Antriebs für Hutablage und Verdeckwanne eine einfache, wirkungsvolle Kinematik zu schaffen, die bequem zu bedienen ist. Dabei soll sich das Verdeck im Wesentlichen erst dann öffnen, wenn im Kofferraum des Fahrzeuges genügend Raum für die abgesenkte Verdeckwanne zur Verfügung steht.

Gemäß der Erfindung wird diese Aufgabe durch die Merkmale des ersten Patentanspruchs gelöst und durch die Merkmale der Unteransprüche vorteilhaft ausgestaltet. Dabei kann es sowohl zu einem Nacheinander als auch in einem gewünschten Umfang zu einem Nebeneinander der Bewegungen von Hutablage und Verdeckwanne einerseits sowie Verdeck andererseits kommen. Der einzige Antrieb kann als Drehmotor oder Linearmotor ausgebildet sein. Er kann als Elektromotor oder als Fluidmotor bzw. Fluidantrieb gestaltet sein. Eine günstige Lösung ergibt sich, wenn der Fluidantrieb eine Zylinder-Kolben-Kombination ist, von der entweder der Kolben oder der Zylinder fahrzeugfest angeordnet ist. Die kinematische Kopplung zwischen den Verstellmitteln für die Hutablage und den Verstellmitteln für die Verdeckwanne wird mit Hilfe eines Hebels vorgenommen, der vorzugsweise als Kniehebel ausgebildet ist und mit einem Ende am Lenker der Hutablagekinematik und mit dem anderen Ende an die unteren Schwinge der Verdeckwannenkinematik angelenkt ist. Die fahrzeugfeste Führungsbahn für den Anlenkpunkt des Kniehebels am Lenker ist vorteilhaft als Kulisse gestaltet. Mit dem Lenker zur Hutablage ist ein Ausgleichstreifen verbunden, der zusammen mit der Hutablage die Verdeckwanne bei abgelegtem Verdeck vollständig abdeckt.
Die vorstehend allgemein skizzierte Lösung kann zu beiden Seiten des Fahrzeuges oder an einer Fahrzeugseite oder mittig hinter der hinteren Sitzbank vorgesehen sein.

Zu Beginn des Öffnungsprozesses wird zunächst die Hutablage mit der Verdeckwanne angesteuert. Das Verdeck bleibt unbewegt. Die Hutablage bewegt sich vollständig unter einem geschlossenen Verdeck, so dass äußere Einflüsse fern gehalten werden. Währenddessen wird die Verdeckwanne infolge der bestehenden kinematischen Kopplung zwischen den Verstellmitteln für die Hutablage und für die Verdeckwanne abgesenkt. Wenn die Verdeckwanne im Verlauf ihrer Abwärtsbewegung auf Ladegut des Kofferraums trifft, das die Abwärtsbewegung blockiert, so läuft zwar die Kinematik weiter, nicht aber die Verdeckwanne. Dadurch wird ein Schalter betätigt, der ein Kollisionssignal auslöst, das einem Steuergerät zugeleitet wird und die Verdeckbewegung unterbindet oder zurückfährt.
Die Möglichkeit, dass der Motor für die Bewegung der Hutablage und der Verdeckwanne über geeignete Getriebemittel und Steuerungen auch die Öffnung und Schließung des Verdecks bewirkt, ist grundsätzlich gegeben.

Die Erfindung wird nachstehend an Hand der verschiedene Bewegungslagen eines Ausführungsbeispiels darstellenden schematischen Aufrisszeichnungen näher erläutert. Es zeigen:
- Fig. 1: die erfindungswesentlichen Teile des Ausführungsbeispiels in der Ausgangslage bei geschlossenem Fahrzeugverdeck,
- Fig. 2: die Hutablage und ihre Kinematik in der Ausgangslage der Fig. 1,
- Fig. 3: die Verdeckwanne und ihre Kinematik in der Ausgangslage,
- Fig. 4: eine erste Bewegungsphase des erfindungsgemäßen Ausführungsbeispiels,
- Fig. 5: das erfindungsgemäße Ausführungsbeispiel bei Blockierung in der ersten Bewegungsphase,
- Fig. 6: das Ausführungsbeispiel in einer zweiten Bewegungsphase,
- Fig. 7: die Auswirkung der Verdecköffnung auf die Kinematik von Verdeckwanne und Hutablage,
- Fig. 8: eine dritte Bewegungsphase, in welcher sich die Hutablage über dem abgelegten Verdeck zu schließen beginnt,
- Fig. 9: die Kinematik der Hutablage in der dritten Bewegungsphase,
- Fig. 10: eine vierte Bewegungsphase, in der die Hutablage bereits im Wesentlichen horizontal gerichtet ist,
- Fig. 11: die Kinematik der Hutablage in der vierten Bewegungsphase,
- Fig. 12: die Endphase der Bewegung der Hutablage bei abgelegtem Verdeck.

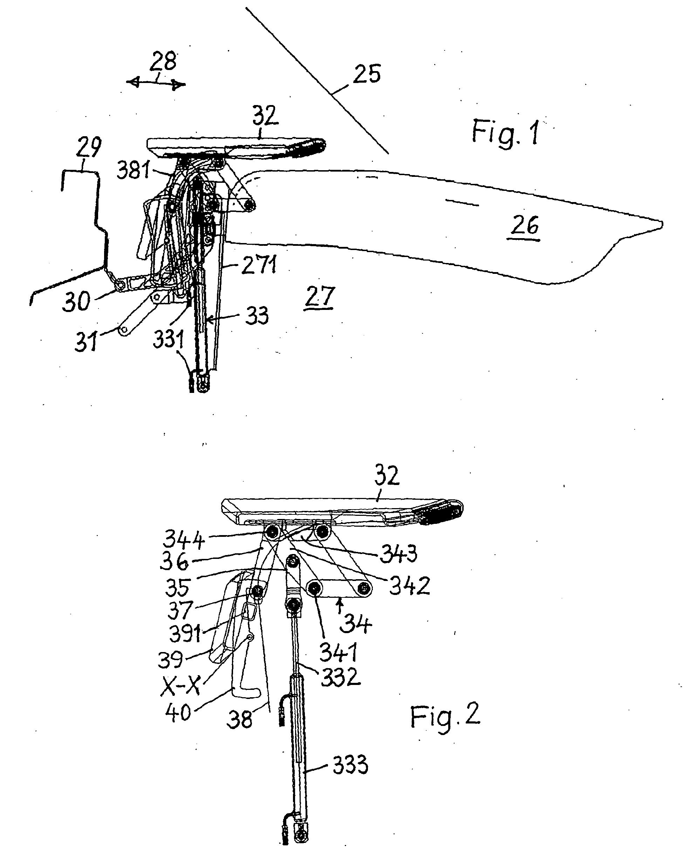

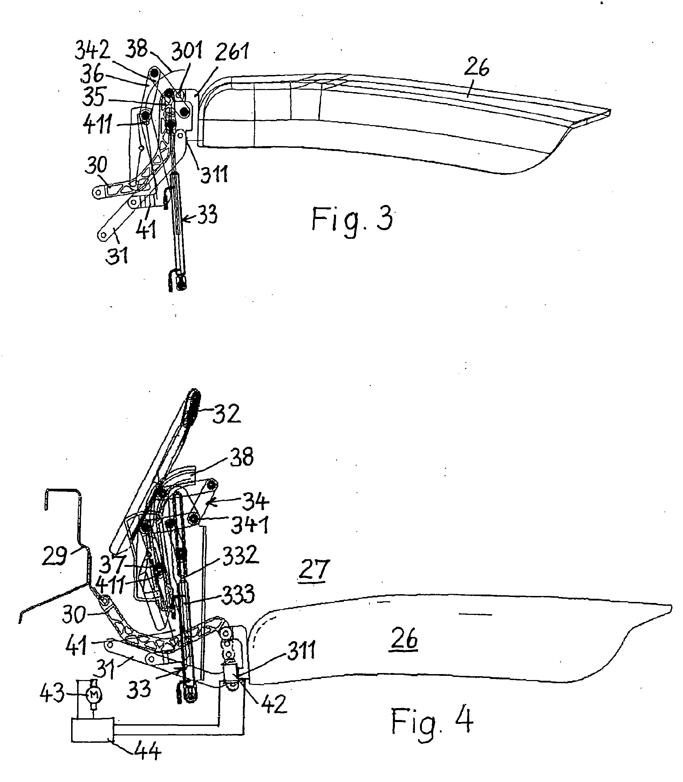

In Fig. 1 ist mit 25 ein Fahrzeugverdeck bezeichnet, dessen Verdeckwanne 26 sich in einem Kofferraum 27 eines im übrigen nicht dargestellten Fahrzeugs befindet, wobei die Fahrzeuglängsachse und die Fahrtrichtung sich in Richtung eines Doppelpfeils 28 parallel zur Zeichenebene der Fig. 1 erstrecken. Die Begrenzung des Kofferraums 27 in Richtung des nicht dargestellten Fahrzeuginnenraums ist durch einen Wandteil 271 angedeutet. Die Fahrzeugquerrichtung ist in Fig.1 rechtwinklig zur Zeichenebene gerichtet; in dieser Richtung ist ein Querträger 29 fahrzeugfest angeordnet, an dem die Verdeckwanne 26 (oder ein Wannenboden) mit Hilfe zweier fahrzeugfest gelagerter Schwingen 30, 31 im Wesentlichen parallel zu sich selbst und zur Zeichenebene verstellbar gelagert ist. Außerdem ist quer zur Fahrtrichtung 28 eine schwenkbare Hutablage 32 vorgesehen. Zur Bewegung der Verdeckwanne 26 und der Hutablage 32 dienen Kinematiken, die von einem Fluidantrieb 33 mit Anschlüssen 331 zu seiner Steuerung angetrieben und zu den nachfolgenden Figuren 2 und 3 detailliert beschrieben werden.
In Fig. 2 ist ein Gelenkviereck 34 erkennbar, das in einem ersten Gelenkpunkt 341 fahrzeugfest gelagert ist und ein Teil 342 sowie ein Folgeteil 343 aufweisen, die in einem zweiten Gelenkpunkt 344 miteinander verbunden sind. Am Folgeteil 343 ist die Hutablage 32 befestigt. An dem Teil 342, im vorliegenden Fall mittig, ist ein Verbindungslenker 35 angelenkt, der seinerseits mit der Kolbenstange 332 des Linearmotors 33 gelenkig verbunden ist, dessen Zylinder 333 fahrzeugfest angeordnet ist. Zum Ausgleich von Zwangskräften kann die gelenkige Verbindung der Kolbenstange 332 mit dem Verbindungslenker 35 auch über eine Kulisse erfolgen, siehe Figur 1. Im Gelenkpunkt 344 ist mit einem Ende ein Lenker 36 angelenkt, dessen anderes Ende mit einem Bolzen 37 versehen ist und mit diesem auf einer fahrzeugfesten Führungsbahn 38 gleitet, die durch eine Kulisse 381 (Fig. 1) festgelegt ist. An dem Lenker 36 ist ein in Fahrzeugquerrichtung vorgesehener, von einer stabilisierenden Schiene 391 gestützter Ausgleichstreifen 39 befestigt, der bei abgelegtem Faltdach eine abdeckende Funktion ausübt. Außerdem ist am Kraftfahrzeug ein Kippriegel 40 um eine im Wesentlichen in Querrichtung verlaufende feste Achse X-X schwenkbar gelagert, der in einer Stellung den Bolzen 37 bei geschlossenem Verdeck 25 in der dargestellten Lage und in der anderen Stellung die abgesenkte Verdeckwanne 26 in ihrer Lage festhält.
In Fig. 3 ist die Verdeckwanne 26 über ein Tragstück 261 mit den Schwingen 30 und 31 verbunden. Dabei besteht vom Tragstück 261 zur Schwinge 30 eine Gelenkverbindung 301 und zur Schwinge 31 eine lösbare Kontaktverbindung 311. An der Schwinge 31 ist ein Kniehebel 41 parallel zur Zeichenebene mit einem Ende schwenkbar gelagert, der an seinem anderen Ende einen in der Führungsbahn 38 gleitenden Mitnehmer 411 hat. Dieser Mitnehmer 411 und der Bolzen 37 sind in Fahrzeugquerrichtung hintereinander angeordnet. Der Fluidantrieb 33 wirkt über den Verbindungslenker 35, das Teil 342 und den Mitnehmer 411 auf den Kniehebel 41 und damit auf die Schwingen 31 und 30 ein. Alle stattfindenden Schwenkungen der Teile des Gelenkvierecks 34, der Lenker 35 und 36, der Schwingen 30 und 31 sowie des Kniehebels 41 vollziehen sich um Achsen, die wie die Achse X-X in Fahrzeugquerrichtung verlaufen.

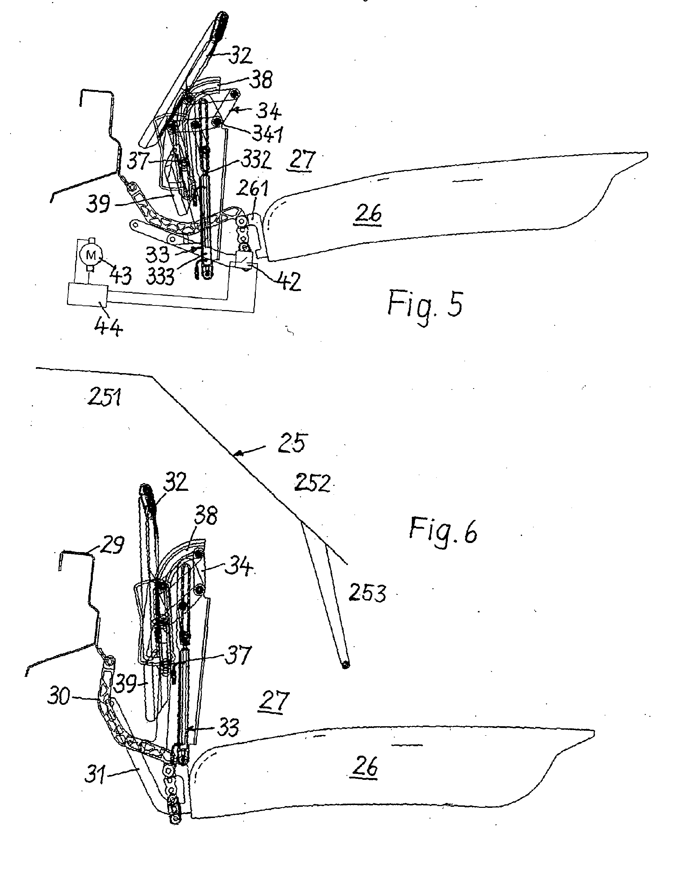

Die in Fig. 4 dargestellte erste Bewegungsphase zeigt die Verdeckwanne 26 in gegenüber dem Querträger 29 in den Kofferraum 27 abgesenkter Stellung und die Hutablage 32 im Zustand des Aufrichtens. Dieser Zustand wird dadurch erreicht, dass die Kolbenstange 332 des Fluidantriebs 33 in den Zylinder 333 hineingezogen wird. Dabei werden das Gelenkviereck 34 um den fahrzeugfesten Gelenkpunkt 341 und der Bolzen 37 mit dem Mitnehmer 411 auf der Führungsbahn 38 bewegt, so dass über den Kniehebel 41 die Schwinge 31 und wegen des durch die Schwerkraft (oder eine andere Zwangskraft) bewirkten Kontaktes an der Kontaktstelle 311 die Verdeckwanne 26 in die in Fig. 4 dargestellte Bewegungslage gedrückt wird. An der Kontaktverbindung 311 befindet sich ein Kontaktschalter 42, der Bestandteil eines Verdeckantriebs 43 und seiner Steuerung 44 ist. Wird durch eine Blockierung im Kofferraum 27 die Kontaktverbindung 311 gelöst, so wird, wie in Fig. 5 dargestellt, der Kontaktschalter 42 geöffnet und damit der Verdeckantrieb 43 nicht eingeschaltet. Bei geeigneter Gestaltung eines von Hutablage und Verdeckwanne getrennten Verdeckantriebs und seiner Steuerung ist es auch möglich, den bereits wirksamen Verdeckantrieb nur zu unterbrechen oder das Dach in seine geschlossene Ausgangslage zurückzufahren.

In Fig. 6 ist die Verdeckwanne 26 mit Hilfe des Fluidantriebs 33, des Gelenkvierecks 34, der Führungsbahn 38, des Führungsbolzens 37 und der beiden fahrzeugfest gelagerten, in Ebenen parallel zur Zeichenebene beweglichen Schwingen 30, 31 in die tiefste Stellung im Kofferraum 27 abgesenkt worden. Die Hutablage 32 und der Ausgleichstreifen 39 sind in dieser Bewegungsphase derart aufgerichtet, dass sie sich im Wesentlichen in einer rechtwinklig zur Zeichenebene gerichteten Ebene befinden. Außerdem ist das Fahrzeugverdeck 25 mit einem vorderen Teil 251 und einem hinteren Teil 252 dargestellt, wobei am hinteren Verdeckteil 252 ein Ausleger 253 starr befestigt ist.

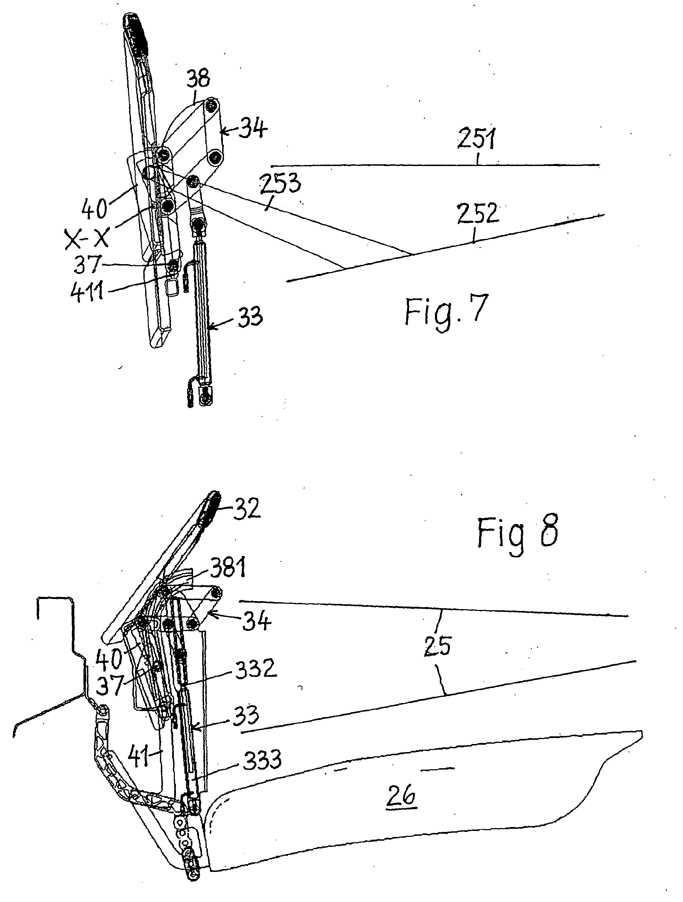

Mit dem Erreichen der Bewegungsphase der Fig. 6 wird das Verdeck 25 durch den gesondert wirkenden Verdeckantrieb 43 (Fig. 4) geöffnet. Dabei drückt der Ausleger 253, wie aus Fig. 7 erkennbar, gegen den oberen Arm des Kippriegels 40, so dass dieser um seine Achse X-X so geschwenkt wird, dass sein unterer Arm den am Kniehebel 41 (Fig. 3) befestigten Mitnehmer 411 in der dargestellten Lage festhält, während der auf dem Lenker 36 befestigte Bolzen 37 sich infolge des über das Gelenkvierecks 34 wirksamen Fluidantriebs 33 auf der Führungsbahn 38 nach oben zurückbewegen kann.

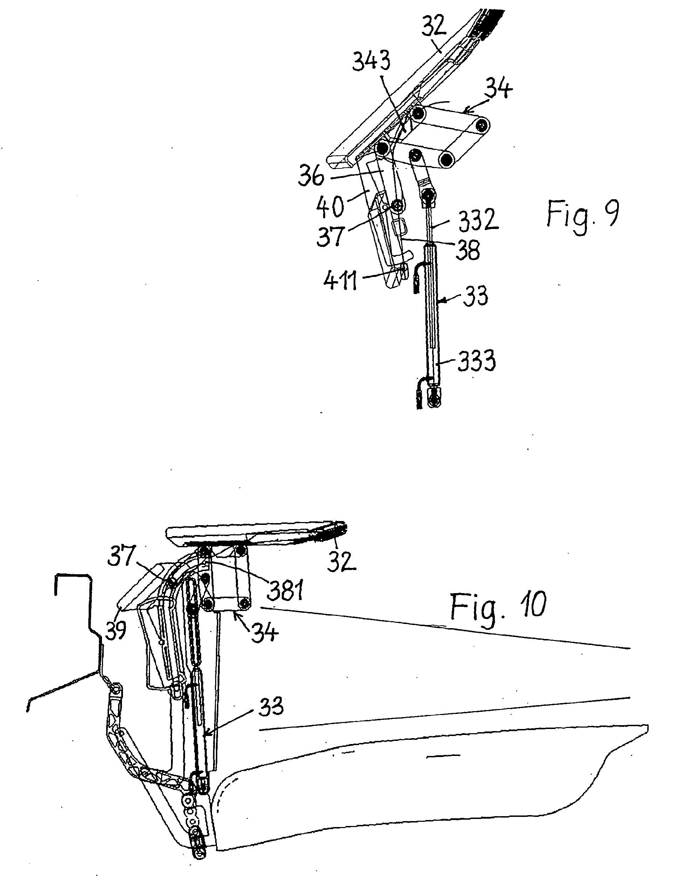

In Fig. 8 ist das Verdeck 25 abgelegt oder nahezu abgelegt. Die Verdeckwanne 26 nimmt unter dem Einfluss des vom Ausleger 453 (Fig. 7) gehaltenen Kippriegels 40 noch immer und bis zur letzten Bewegungsphase die in Fig. 6 erreichte Lage ein. Da die Kolbenstange 332 des Fluidantriebs 33 aus dem Zylinder 333 herausgepresst wird, bewegt sich der auf dem Lenker 36 befestigte und durch die Kulisse 381 geführte Bolzen 37 nach oben. Dem entsprechend verändern sich Lage und Geometrie des Gelenkvierecks 34 sowie des zu ihm gehörenden Folgeteils 343 (Fig. 9) mit dem die Hutablage 32 fest verbunden ist. Letztere kippt aus der aufgerichteten Lage der Fig. 7 parallel zur Zeichenebene und in Richtung der nicht dargestellten Längsachse des Fahrzeugs nach hinten. Fig. 9, die abweichend von Fig. 8 der Übersichtlichkeit halber nur die Kinematik der Hutablage 32 enthält, lässt deutlich die gegenüber der Fig. 7 ausgefahrene Kolbenstange 332 erkennen, die lediglich den Bolzen 37, nicht aber den vom Kippriegel 40 blockierten, am Kniehebel 41 befestigten Mitnehmer 411 entsprechend der Führungsbahn 38 bewegt hat.

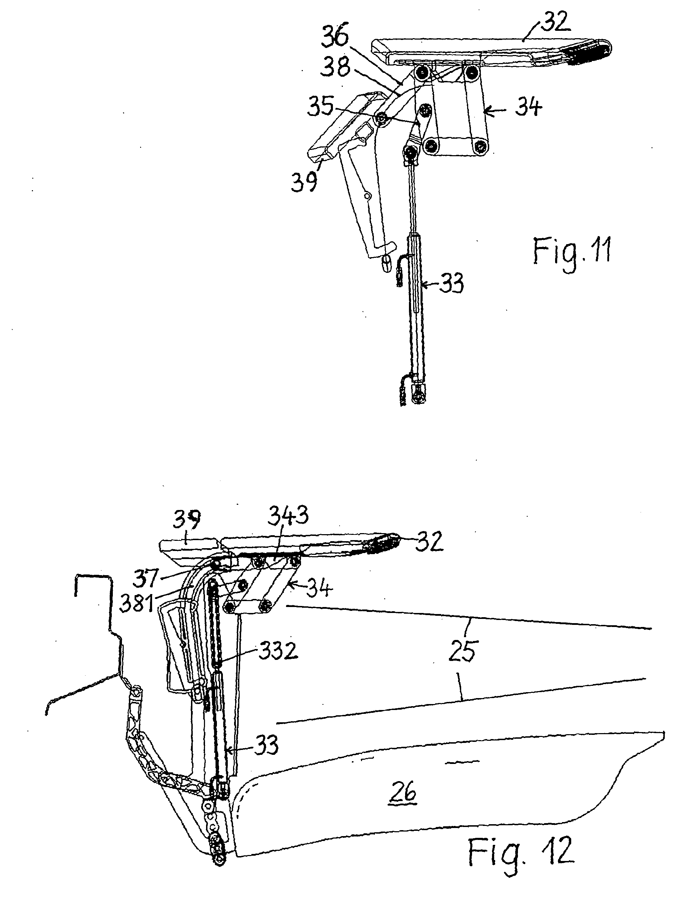

In der vierten Bewegungsphase gemäß den Figuren 10 und 11 ist die Hutablage 32 wieder in ihre im Wesentlichen horizontale Lage eingeschwenkt. Der mit Hilfe einer nicht dargestellten Steuerung gesteuerte Fluidantrieb 33 hat durch die Zwangsführung des Bolzens 37 mit Hilfe der Kulisse 381 über den Verbindungslenker 35 das Gelenkviereck 34 aufgerichtet. Gleichzeitig nähert sich der mit dem Lenker 36 fest verbundene Ausgleichstreifen 39 seiner Endlage.

Aus der Fig. 12 ist der Abschluss der Endphase der Bewegung erkennbar, der darin besteht, dass die Verdeckwanne 26 abgesenkt, das Fahrzeugverdeck 25 über der Verdeckwanne 26 abgelegt und die Abdeckung des zusammengefalteten Verdecks 25 gegen äußere Einflüsse mit Hilfe der Hutablage 32 und des Ausgleichstreifens 39 vorgenommen ist. Hierzu wird die Kolbenstange 332 des Fluidantriebs 33 so weit ausgefahren, dass der Bolzen 37 in den nahezu horizontalen Bereich der Führungsbahn 38 bzw. Kulisse 381 gelangt und damit der Ausgleichstreifen 39 mit der Hutablage 32 in einer Ebene liegt. Dabei wird das Gelenkviereck 34 und damit die an seinem Folgeteil 343 befestigte Hutablage 32 parallel zur Fahrzeuglängsachse nach hinten verschoben.

Beim Schließen des Verdecks laufen die vorstehend beschriebenen Bewegungsphasen in umgekehrter Reihenfolge ab.

Die Erfindung erschöpft sich nicht im vorstehend beschriebenen Ausführungsbeispiel. Sie ist hinsichtlich der verwendeten Antriebe und hinsichtlich der verwendeten kinematischen Mittel vielfältig variierbar. Hierzu können alle in der Beschreibung, den nachfolgenden Ansprüchen und der Zeichnung dargestellten Merkmale sowohl einzeln als auch in beliebiger Kombination miteinander erfindungswesentlich sein. Wichtig ist nur, dass zunächst die Hutablage und die Verdeckwanne und zu einem späteren Zeitpunkt das Verdeck zu seiner Öffnung angesteuert werden und dass die Verdeckbewegung blockiert oder rückgängig gemacht wird, wenn die Verdeckwanne nicht im vorgesehenen Umfang abgesenkt werden kann. Dabei können alle beschriebenen Vorgänge nach einem Knopfdruck automatisch ablaufen.

### Bezugszeichenliste

- 25: Fahrzeugverdeck
- 26: Verdeckwanne
- 27: Kofferraum
- 28: Doppelpfeil
- 29: Querträger
- 30, 31: Schwingen
- 32: Hutablage
- 33: Fluidantrieb
- 34: Gelenkviereck
- 35: Verbindungslenker
- 36: Lenker
- 37: Bolzen
- 38: Führungsbahn
- 39: Ausgleichstreifen
- 40: Kippriegel
- 41: Kniehebel
- 42: Kontaktschalter
- 43: Verdeckantrieb
- 44: Steuerung des Verdeckantriebs
- 251: vorderes Verdeckteil
- 252: hinteres Verdeckteil
- 253: Ausleger
- 261: Tragstück
- 301: Gelenkverbindung
- 311: Kontaktverbindung
- 331: Anschlüsse
- 332: Kolbenstange
- 333: Zylinder
- 341, 344: Gelenkpunkt
- 342: Teil
- 343: Folgeteil
- 381: Kulisse
- 391: Schiene
- 411: Mitnehmer
- X-X: Achse

## Patentansprüche

1. Kraftfahrzeug mit einem faltbaren, in einer Verdeckwanne ablegbaren Verdeck, die senk- und hebbar gestaltet einen wechselnden Teil des Kofferraums umfasst und zumindest teilweise durch eine Hutablage verschließbar ist, wobei sowohl für die Bewegung des Verdecks als auch für die Bewegung der Hutablage und der Verdeckwanne kinematische Anordnungen vorgesehen sind, **dadurch gekennzeichnet, dass** die Hutablage und die Verdeckwanne von nur einem Motor unabhängig vom Verdeck angetrieben werden.

2. Kraftfahrzeug gemäß Anspruch 1, **dadurch gekennzeichnet, dass** die kinematische Anordnung für die Verdeckwanne einen Schalter enthält, bei dessen Betätigung der Antrieb des Verdecks abgeschaltet ist.

3. Kraftfahrzeug gemäß Anspruch 1 oder 2, **dadurch gekennzeichnet, dass** der Motor für die Hutablage und die Verdeckwanne auf ein Teil eines Gelenkvierecks wirkt, welches Teil mit einem Ende in einem ersten Gelenkpunkt fest am Kraftfahrzeug gelagert und an das am anderen Ende in einem zweiten Gelenkpunkt ein Folgeteil angelenkt ist, mit dem die Hutablage fest verbunden ist, dass im zweiten Gelenkpunkt ein Lenker mit einem Ende gleichachsig mit Teil und Folgeteil gelagert ist, dessen anderes Ende in einer fahrzeugfesten Bahn definiert geführt wird, dass die Verdeckwanne mit Hilfe von Schwingen höhenverstellbar am Kraftfahrzeug gelagert ist und dass an einer der Schwingen mit einem Ende ein Hebel gelagert ist, dessen anderes Ende mit dem anderen Ende des Lenkers verbunden ist und mit diesem definiert geführt wird.

4. Kraftfahrzeug gemäß Anspruch 1, **dadurch gekennzeichnet, dass** der Motor als Linearmotor gestaltet ist.

5. Kraftfahrzeug gemäß Anspruch 3, **dadurch gekennzeichnet, dass** der Motor ein Rotationsmotor und im ersten Gelenkpunkt angeordnet ist und das eine Teil des Gelenkvierecks schwenkt.

6. Kraftfahrzeug gemäß Anspruch 4 oder 5, **dadurch gekennzeichnet, dass** der Motor ein Hydraulikmotor ist.

7. Kraftfahrzeug gemäß Anspruch 6, **dadurch gekennzeichnet, dass** der Hydraulikmotor aus Zylinder und Kolben besteht, von denen ein Teil fahrzeugfest angeordnet ist.

8. Kraftfahrzeug gemäß Anspruch 3, **dadurch gekennzeichnet, dass** der Hebel als Kniehebel ausgebildet ist.

9. Kraftfahrzeug gemäß Anspruch 3, **dadurch gekennzeichnet, dass** zur Lagerung der Verdeckwanne zwei Schwingen übereinander angeordnet sind und der Hebel an der unteren Schwinge mit einem Ende gelagert ist.

10. Kraftfahrzeug gemäß Anspruch 9, **dadurch gekennzeichnet, dass** zwischen der Verdeckwanne und dem oberen Hebel eine Drehverbindung sowie zwischen der Verdeckwanne und dem unteren Hebel eine als Schalter wirkende Kontaktverbindung besteht.

11. Kraftfahrzeug gemäß Anspruch 3, **gekennzeichnet durch** einen doppelarmigen Kippriegel, der zumindest angenähert mit seiner Mitte fahrzeugfest gelagert ist und in Abhängigkeit von der Stellung der Verdeckwanne in einer Kippstellung, bei gehobener Verdeckwanne, das eine Ende des Hebels und in der anderen Kippstellung, bei abgesenkter Verdeckwanne, das andere Ende des Hebels arretiert.

12. Kraftfahrzeug gemäß Anspruch 3, **dadurch gekennzeichnet, dass** mit dem Lenker ein Ausgleichstreifen für die Abdeckung der abgesenkten Verdeckwanne verbunden ist.
